# EUROPEAN PATENT SPECIFICATION

(11) **EP 1 890 367 B1**
(45) Date of publication and mention of the grant of the patent: **16.12.2009**
(21) Application number: 07007478.6
(22) Date of filing: 12.04.2007
(51) Int. Cl.: H02B 1/30, H02B 1/50

(54) **To-be introduced improvements for cabinets housing telecommunication equipment**
Einzuführende Verbesserungen für Telekommunikationsgeräte enthaltende Schränke
Améliorations à apporter à des armoires abritant des équipements de télécommunication

(30) Priority: 17.08.2006 BR PI8601692 U
(43) Date of publication of application: 20.02.2008
(73) Proprietor: Nilko Metalurgia, Ltda., Pinhais (PR)
(72) Inventor: Huscher, Fraimundo, JD Santa Barbara Curitiba PR (BR)
(74) Representative: Lorente Berges, Ana

(56) References cited:
- EP-A- 1 303 015
- WO-A-01/91529
- US-A- 5 695 263

## Description

The current utility model patent refers to specific telecommunications cabinets in general, and more specifically, to improvements introduced in cabinets that house telecommunication equipment which, in accordance to its general characteristics, has as basic principle the manufacturing of modular cabinets, either standardized or customized, of easy assembly and installation, built on a structure of extruded profiles that allows for several combinations of shapes and sizes, besides providing a system of slipping fits for the closing panels which allow for more security, better use of space, better finishing and quick assembly; ensuring the durability, flexibility and safety. With a modem and specific design allowing easy access for better fitting and security, practical characteristics for assembly and functionality, accessible costs and, due to its general characteristics and dimensions, being easily adaptable to any kind of telecommunications equipment cabinets of any size, independently of what pieces of telecommunication equipment are inside it and how they are installed.

The patent in consideration has as main trait to join components and processes in a differentiated conception that will fulfil the many requirements that the nature of the utilization requires, i.e. the optimization of the manufacturing and assembling of the cabinets, keeping the same level of protection for the telecommunications equipment when facing the most diverse working conditions. That conception guarantees a cabinet for the protection of telecommunications equipment of great efficiency, functionality, strength, durability, versatility and safety due to the excellence of the aggregated technical qualities that provides advantages and improvements to this kind of cabinets as a whole, which also have general characteristics unlike the ones of the other shapes and models known by the existing technical state of the art.

The cabinets widely known by the technical state of the art and currently used in telecommunications, are usually built with welded structures and bolted profiles, with the welded structures acting as a limiter in terms of shapes and models and also being of difficult assembly; as for the case of the structures built with bolted profiles, they consist of ducts for floating nuts in all the fastening sides, something that holds good results for the manufacturing of modular cabinets, but presents considerable difficulties when assembling the cabinets, since too much time is required to localize and assemble the pairs of nuts and bolts, the reason for that being that the nuts are almost always hidden behind an angle steel or a profile, and when trying to fix a bolt to most of them, they usually move away from position, requiring the assembler to reposition them again until he is able to fix them, therefore consuming considerable time in assembling the cabinets.
The improvements that are being introduced in the cabinets, which house telecommunication equipment are based on a differentiated and innovative conception, allowing for easy solutions to some of the major inconveniences found in other forms and models currently in the market and used to assemble and finish cabinets for telecommunication equipment; the cabinet, object of this patent is manufactured using structure of extruded profiles built on aluminium or a similar material, that keeps the ducts for the floating nuts only on the sides where the hinges are installed since those remain loose until the final adjustment of the doors; for the other sides or profiles which does not require a hinge, a system with ducts and longitudinal threads is used, allowing for the direct fastening of the screws on the profile, thus discarding the need of floating nuts and therefore solving one of the current problems of the technical state of the art, since this process allows the assembler to fix the bolt in any place without having to worry about adjusting the nut to a previously determined place, and therefore making the process to assembly the cabinets simpler and less time consuming. Besides, the profiles were perfectly elaborated based on models which allow a series of combinations for plate fixing and internal devices, as well as the manufacturing of several different cabinet models and sizes,

The present patent employs modem, versatile, efficient and functional improvements introduced in the development of cabinets that house telecommunications equipment, comprising a set of mechanical solutions correctly incorporated establishing a set of profiles and devices that greatly facilitate and reduce the time to assembly, as well as the final finishing, all that in addition to great strength and security, exclusive design, detailed superb finishing, aesthetic attractiveness and with exclusive characteristics, resulting in a totally efficient and economical cabinet, built in aluminium or similar materials, and basically consisting of: a metallic rectangular base, a constructive lay-out in the column profiles with mixed fastening elements and flange, a constructive lay-out in the column profiles with fastening elements and a constructive lay-out in baser profiles as locking and support elements, a constructive lay-out in the intermediary profiles with mixed fixing system that may support lids and doors, a constructive lay-out in triple "C" profile as fixing element of vertical internal compartments, a constructive lay-out in horizontal intermediary profile as fixing element of horizontal internal compartments, a constructive lay-out in "C" profile as locking, fixing and supporting element for internal devices, a constructive lay-out in the hinges, a constructive layout applied in the composition of plates used in doors and closing panels as security elements, as a mean to make up the body of the general telecommunications equipment cabinet made of double aluminium plates or similar material and with a closing system of the sandwich type, plate to plate, double wall and extenders, of a complete and totally secure set, whose internal and external shapes allow for the perfect storage inside it of the most diverse types of telecommunications equipment, with the specific goal of ensuring and protecting its integrity, and for the integrity of the equipment stored inside it, when facing situations of undesirable access attempts and the action of bad weather conditions, when installed in public places, or similar ones.

Through the present improvements introduced in the telecommunications equipment storing cabinet, is possible to increase productivity, reduce costs with materials and manpower, diversify models and sizes, protect the equipment against vandalism or theft, and improve the strength of the ensemble against bad weather or similar conditions, incorporating state of the art technological solutions which provide an excellent level of security, strength, durability and quality to the whole process of protection and utilization of these cabinets to store telecommunications equipment.

The objectives, advantages, and other important characteristics of the considered patent, will be better understood when read together with the attached drawings, where:

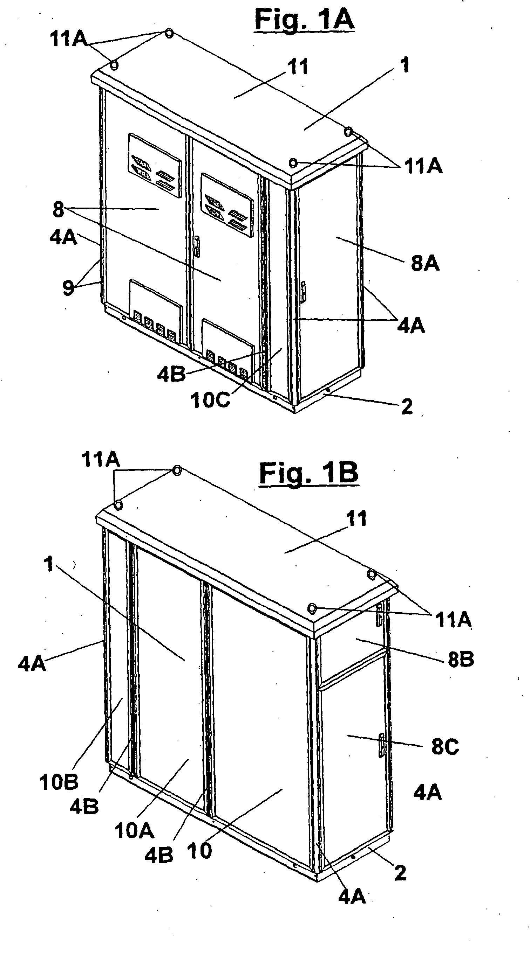

Figure 1A shows a front view of the constructive lay-outs applied in cabinets used to house telecommunications equipment.
Figure 1B shows a back view of the constructive lay-outs applied in cabinets used to house telecommunications equipment.

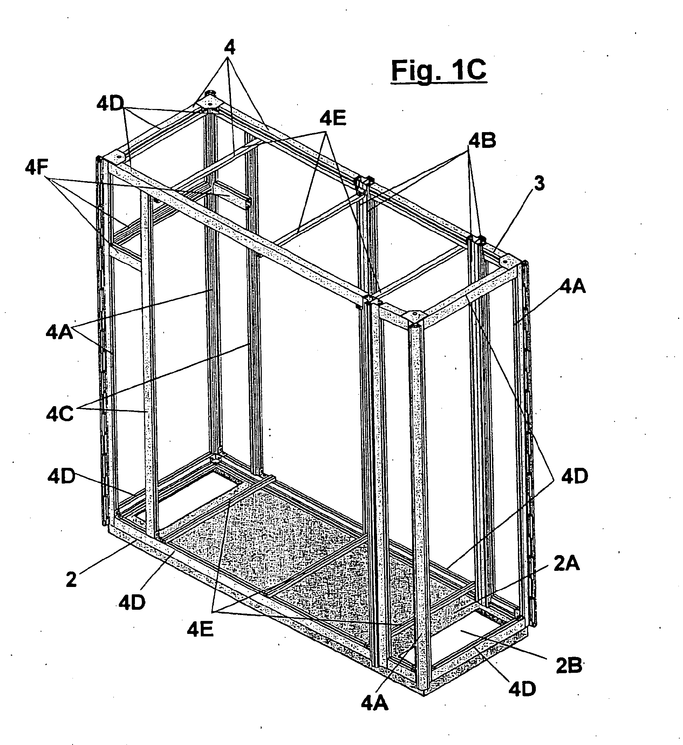

Figure 1C shows a perspective view of the constructive lay-outs applied in cabinets used to house telecommunications equipment.

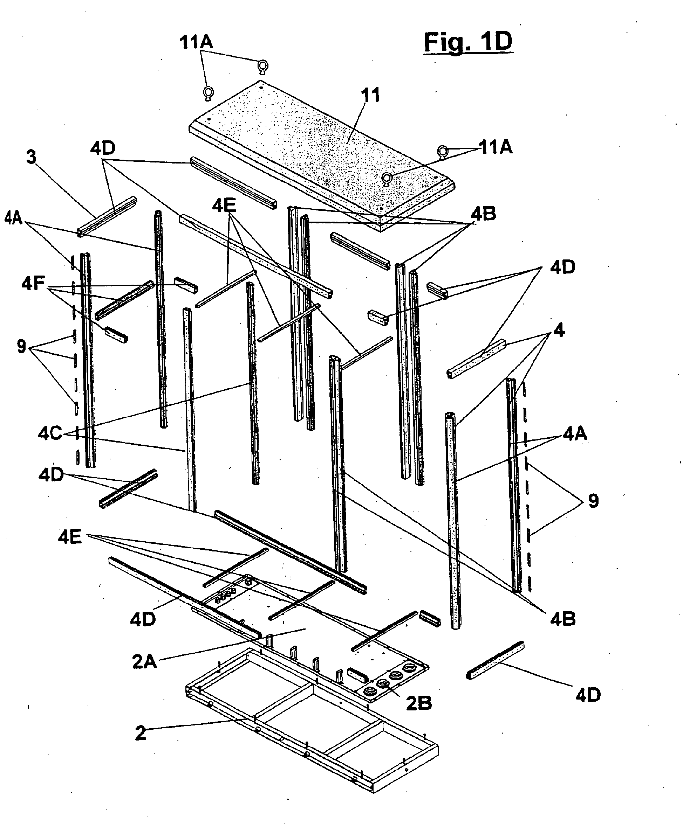

Figure 1D shows an exploded perspective view of the constructive lay-outs applied in cabinets used to house telecommunications equipment.

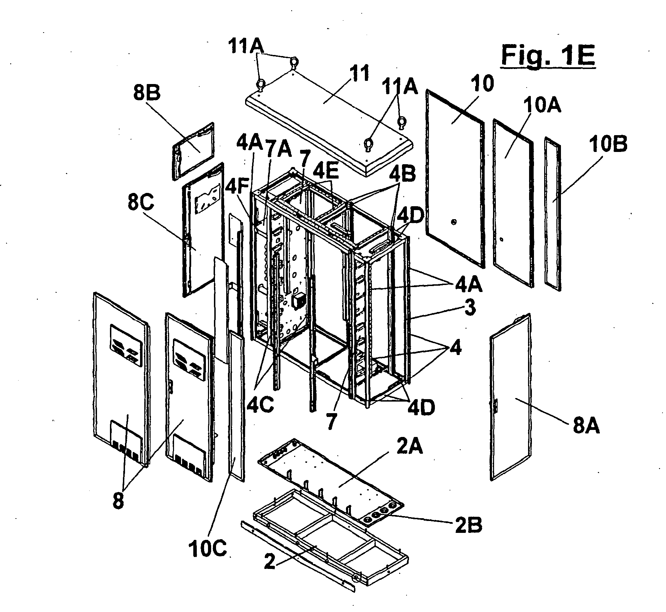

Figure 1E shows an exploded perspective view of the constructive lay-outs applied in cabinets used to house telecommunications equipment in the disposition with internal and external accessories.

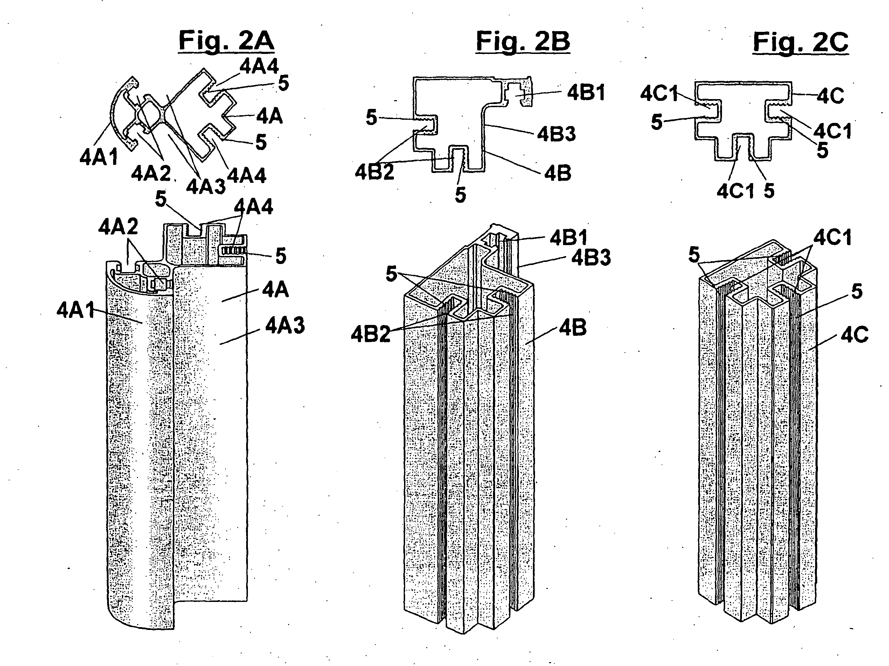

Figure 2A shows a topside view and a column-profile's perspective view.
Figure 2B shows a topside view and an intermediary-profile's perspective view.
Figure 2C shows a topside view and a "Triple C"-profile's perspective view.

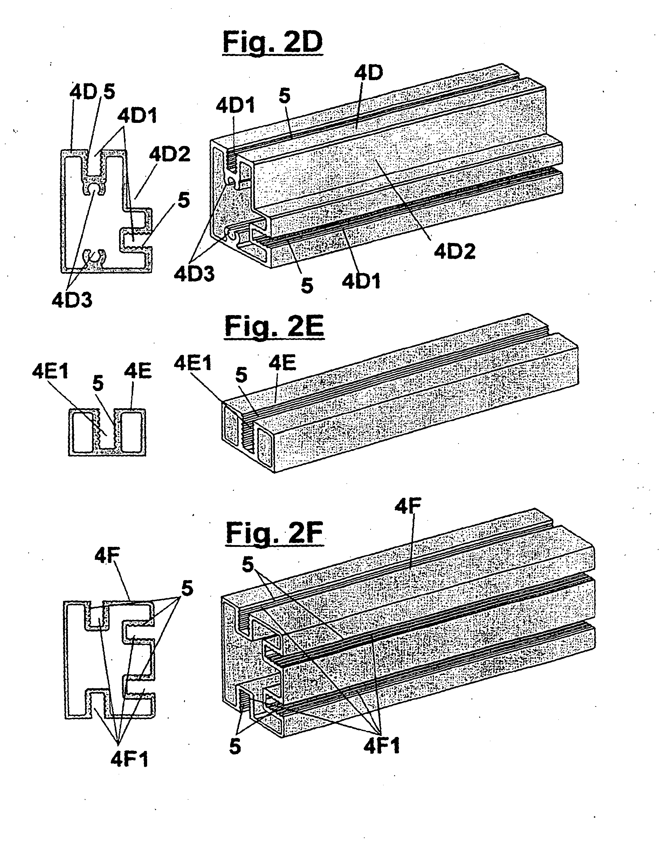

Figure 2D shows a topside view and a base-profile's perspective view.
Figure 2E shows a topside view and a "C"-profile's perspective view.
Figure 2F shows a topside view and an intermediary-horizontal-profile's perspective view.

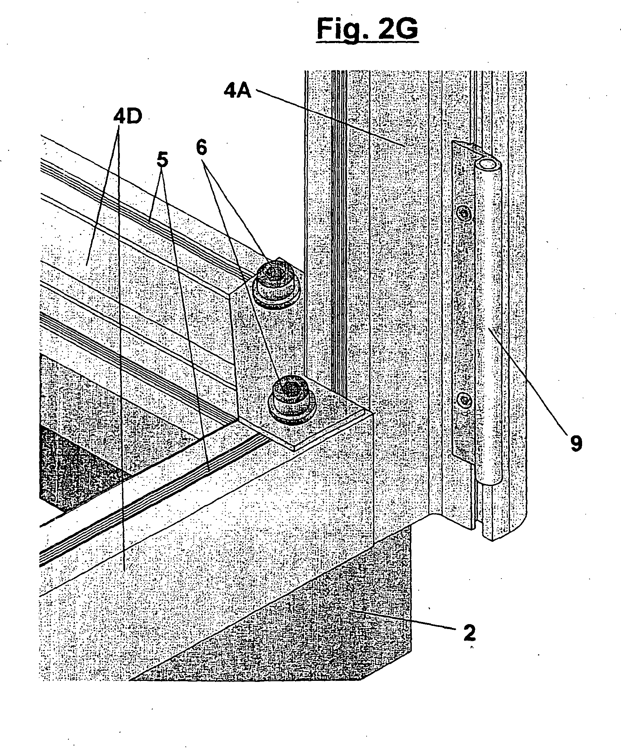

Figure 2G shows a perspective view of a locking detail between profiles and the fixing of the screw in the profile.

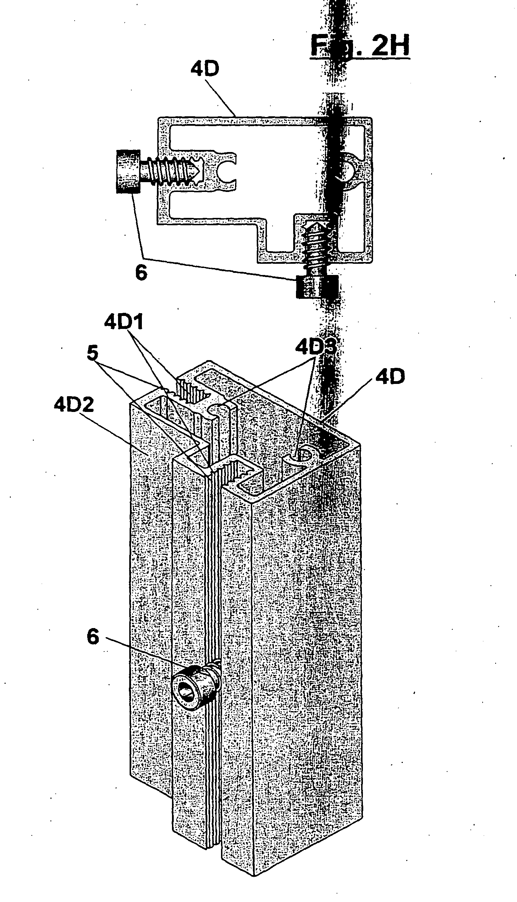

Figure 2H shows a topside view and a perspective view showing the fixing of the screw in the profile.

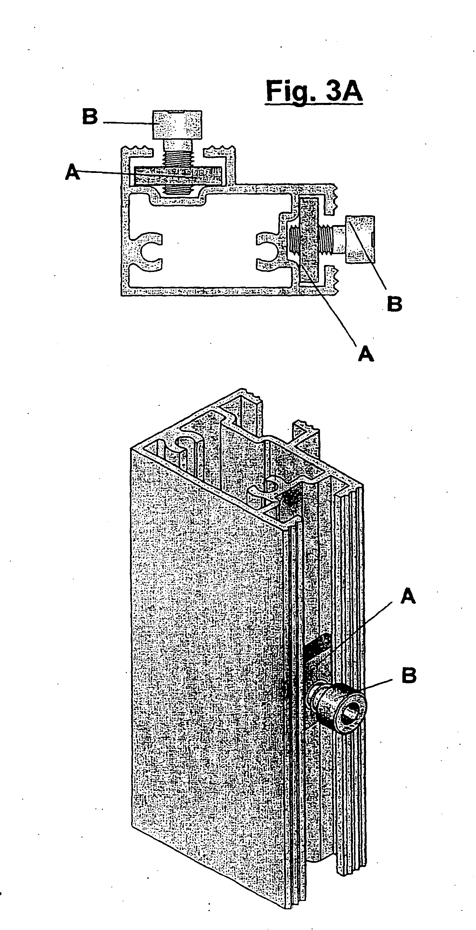

Figure 3A shows a topside view and a perspective view of the state of art in the fixing of the screw in the floating nut.

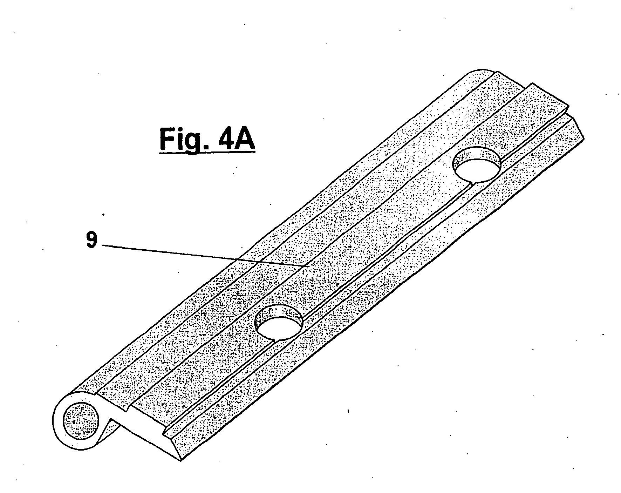

Figure 4A shows a perspective view of the hinge.

As can be inferred from the attached drawings, which are part of this descriptive report on the utility model of the patent of the "To-Be-Introduced Improvements for Cabinets Housing Telecommunications Equipment", in the figures in annex the dispositions are presented in a general way, compounded by an ensemble of devices and improvements for the composition of modular cabinets, either standardized or personalized, being of easy installation and assembly, built with metallic materials or similar ones, with shape and disposition, both internal and external, in a way that allows a perfect storage of the most diverse types of telecommunications equipment in general inside the cabinet (1), which in turn comprises a base (2) made of a metallic structure in a rectangular shape, that on top has a plate (2A) of general rectangular shape and entries for ducts (2B) and also over the base (2) a frame is fixed (3) of a parallelepiped shape, that is assembled by means of a set of extruded profiles (4) manufactured in aluminium and made of column-profiles (4A), intermediary profiles (4B), Triple "C" profiles (4C), base profiles (4D), "C" profiles (4E) and horizontal-intermediary profiles (4F), each with longitudinal threads (5) distributed all over the internal walls of the profiles' ducts, which in turn are used for the direct fastening of the bolts (6); on the internal side of the framework (3), dividing plates (7) of general rectangular shapes, are fastened to serve as a base for the fastening of wires, cables and electronic components; and on the external walls are placed and fixed the front door (8), side doors (8A), (8B) and (8C), both fixed to the metallic structure (3), through hinges (9) and on the side where no doors are found, closing panels are used (10), (10A), (10B) and (10C) of general rectangular shape, which may be fixed or movable and a top lid (11) of trunk-pyramidal shape, with coupling (11A) for top lifting.

The column profiles (4A) of a specific general shape have an arched border (4A1) to allow for the comer's finishing, two ducts (4A2) arranged in opposing sides that are used for the sliding and fitting of the floating nuts (A), two perpendicular bases (4A3) arranged in opposing sides and used for fitting the doors (9) and (10) or the moveable panels (11); two ducts (4A4) where the threads (5) are placed; the column profiles (4A) are vertically arranged in the frontal corners of the framework (3).

The intermediary profiles (4B) of a "b" shape, have straight corners and borders with a duct (4B1) for the sliding and fitting of the floating nut (A), two ducts (4B2) with nuts (5) perpendicular between them, a perpendicular base (4B3) to accommodate a door or a closing panel.

The Triple "C" profiles (4C) of parallelepiped shape, has in three of its corners, ducts (4C1) with threads (5) placed on the front and sideways.

The base profiles (4D) of parallelepiped shape, has on its outside two ducts (4D1) with threads (5) and between them a perpendicular base (4D2) that accommodates the top and bottom doors or closing panels and in the inside two cylindrical ducts (4D3) to side fix the profiles.

The "C" profiles (4E) of parallelepiped shape, have a duct (4E1) and a thread (5) on its front.

The horizontal intermediary profiles (4F) of parallelepiped shape, have ducts (4F1) and threads (5), two on the front and two on the sides.

The improvements introduced for the cabinet that shelters telecommunication equipment, once all components are thoroughly fitted and fixed, nothing becomes loose, nothing becomes crooked, and that it has a long durability and it's absolutely safe. After fitted and fastened to the cabinet's body (1), the components remain locked and tied, thus precluding any component to become loose with usage, and keeping the ensemble totally available for storing any kind of telecommunications equipment. Therefore, the cabinet (1) can be easily and directly used with no concerns whatsoever in relation to its durability and security.

Having its structures built from metallic material, or a similar material of the same or greater strength and lightness, the improvements introduced in the cabinets that house telecommunications equipment and, consequently, their components and accessories, do not rust, are waterproof, possess great durability and strength, offer improved security and, when generally applied to the cabinets (1), do not present any risks related to the stress of its structures or of the stored equipment.

Based on what has been exposed, it is an improvement that will be welcomed by the companies that manufacture and use cabinets for the storage of telecommunications equipment in general, once such improvements introduced in the cabinet, that shelters telecommunication equipment, offer many advantages, such as: great security, reliability and nimbleness in its applications and use, since it involves high technology concepts; great strength and general durability with small or no wearing of the ensemble as a whole; improved comfort, convenience and security for the users; highly accessible costs allowing for an optimum cost / benefit ratio; can be easily and safely used by any kind of user; maintenance interventions easy to perform and at a low cost; great mobility and flexibility of the ensemble, being easy to transport to any place; modem and bold design; installation and assembly practical and safe; general dispositions that doesn't hinder the normal operation of the cabinet, without any waste physical space; great strength against bad weather conditions; inner access totally controlled; more internal space available in the cabinet; and last but not least, the certainty to have a cabinet (1) capable of storing the most diverse types of telecommunications equipment that completely fulfils the basic conditions necessary to its application, the rules and legislations related to the area, and the basic requirements related to security, durability, and practicality; nevertheless, the measures, dimensions, and quantities can vary in accordance to its usage needs.

## Claims

1. CABINET HOUSING TELECOMMUNICATION EQUIPMENT, comprising an ensemble of devices and improvements used in the composition of modular standardized or personalized cabinets, of easy installation and assembly, built with metallic materials or similar ones, of a shape and internal and external disposition that favours the storage of the most diverse types of telecommunications equipment inside the cabinet (1), further comprising a base (2) made of a metallic structure in a rectangular shape, that on top has a plate (2A) of general rectangular shape and entries for ducts (2B) and also over the base (2) a frame is fixed (3) of a parallelepiped shape, that is assembled by means of a set of extruded profiles (4) manufactured in aluminium and made of column-profiles (4A), intermediary profiles (4B), Triple "C" profiles (4C), base profiles (4D), "C" profiles (4E) and horizontal-intermediary profiles (4F); on the internal side of the framework (3), dividing plates (7) of general specific shapes, are fastened to serve as a base for the fastening of wires, cables and electronic components; on the outside the front doors are fixed (8) ... side doors (8A), (8B) and (8C), both fixed to the metallic structure (3), through hinges (9) and on the side where no doors are found, closing panels are used (10), (10A), (10B) and (10C) of general rectangular shape, which may be fixed or movable and a top lid (11) of trunk-pyramidal shape, with coupling (11A) for top lifting, **characterized by** each of the profiles (4A-4F) has a system of longitudinal threads (5) distributed through the internal walls of the profiles ducts (4A2, 4A4, 4B1, 4B2, 4C1, 4D1, 4E1, 4F1), which in turn are used for direct fastening of the bolts (6) in any place along the profiles (4A-4F).

2. CABINET HOUSING TELECOMMUNICATION EQUIPMENT", in accordance with claim 1, **characterized by** column profiles (4A) of a specific general shape that have an arched border (4A1) to allow for the corner's finishing, two ducts (4A2) arranged in opposing sides that are used for the sliding and fitting of the floating nuts (A), two perpendicular bases (4A3) arranged in opposing sides and used for fitting the doors (9) and (10) or the moveable covers (11); two ducts (4A4) where the threads (5) are placed; the column profiles (4A) are vertically arranged in the frontal corners of the framework (3).

3. CABINET HOUSING TELECOMMUNICATION EQUIPMENT, in accordance with claim 1, **characterized by** intermediary profiles (4B) of a "b" shape with straight corners and borders, that have in his body a duct (4B1) for sliding and fixing of the floating nut (A), two ducts (4B2) with threads (5), perpendicularly arranged between them, a perpendicular base (4B3) to accommodate a door or a closing panel.

4. CABINET HOUSING TELECOMMUNICATION EQUIPMENT, in accordance with claim 1, **characterized by** Triple "C" profiles (4C) of parallelepiped shape, having in three of its corners, ducts (4C1) with threads (5) on the front and sides.

5. CABINET HOUSING TELECOMMUNICATION EQUIPMENT, in accordance with claim 1, **characterized by** base profiles (4D) of a general parallelepiped shape, that have on the outside two ducts (4D1) with threads (5) and between them a perpendicular base (4D2) used to accommodate the top and bottom of doors and closing panels an on the inside two cylindrical ducts (4D3) to side fix the profiles.

6. CABINET HOUSING TELECOMMUNICATION EQUIPMENT, in accordance with the claim 1, **characterized by** "C" profiles (4E) of a general parallelepiped shape, with a duct (4E1) and a thread (5) on its front.

7. CABINET HOUSING TELECOMMUNICATION EQUIPMENT, in accordance with the claim 1, **characterized by** horizontal-intermediary profiles (4F) of a general parallelepiped shape, with ducts (4F1) and threads (5), two on the front and two on the sides.

## Patentansprüche

1. GEHÄUSE ZUM EINBAU VON TELEKOMMUNIKATIONSAUSRÜSTUNG, umfassend eine Gruppe von Vorrichtungen und Verbesserungen, die in der Zusammensetzung modular standardisierter oder personalisierter Gehäuse verwendet werden, die sich leicht installieren und zusammenbauen lassen, mit Metall- oder ähnlichen Materialien gebaut werden und eine Form und eine innere und äußere Einrichtung aufweisen, die die Aufbewahrung der unterschiedlichsten Typen von Telekommunikationsausrüstung im Inneren des Gehäuses (1) unterstützen, zudem umfassend eine Basis (2), die aus einer rechteckigen Metallstruktur besteht, auf der sich oben eine gewöhnlich rechteckige Platte (2A) und Eingänge für Kanäle (2B) befinden, wobei auch über der Basis (2) ein spatförmiger Rahmen (3) befestigt ist, der mit Hilfe eines Satzes extrudierter Profile (4) zusammengebaut wird, die aus Aluminium hergestellt werden und aus Säulenprofilen (4a), Zwischenprofilen (4B), Dreifach-"C"-Profilen (4C), Basis-Profilen (4D), "C"-Profilen (4E) und horizontalen Zwischenprofilen (4F) bestehen; wobei auf der Innenseite des Rahmens (3) Teilungsplatten (7) mit allgemeinen spezifischen Formen, befestigt sind, die als Basis zum Befestigen von Drähten, Kabeln und Elektronikkomponenten dienen; auf der Außenseiten die Vordertüren (8), Seitentüren (8A), (8B) und (8C) befestigt sind, die jeweils über Scharniere (9) an der Metallstruktur (3) befestigt sind, und auf der Seite, an der sich keine Türen befinden, gewöhnlich rechteckige Abschlussfelder (10), (10A), (10B) und (10C) verwendet werden, die fest oder beweglich sein können, sowie ein oberer Deckel (11) mit Pyramidenstamm-Form mit einer Kupplung (11A) zum Hochheben, **dadurch gekennzeichnet, dass** die Profile (4A-4F) jeweils ein System von Längsgewinden (5) aufweisen, die über die Innenwände der Kanäle (4A2, 4A4, 4B1, 4B2, 4C1, 4D1, 4E1, 4F1) der Profile verteilt sind, die wiederum zur direkten Befestigung der Schrauben (6) an einer beliebigen Stelle an den Profilen (4A-4F) verwendet werden.

2. GEHÄUSE ZUM EINBAU VON TELEKOMMUNIKATIONSAUSRÜSTUNG nach Anspruch 1, **gekennzeichnet durch** Säulenprofile (4A) einer spezifischen allgemeinen Form, die eine gekrümmte Einfassung (4A1) aufweisen, die die Weiterverarbeitung der Ecke ermöglicht, zwei Kanäle (4A2), die an gegenüberliegenden Seiten angeordnet sind und die zum Verschieben und Einpassen der schwimmend gelagerten Muttern (A) verwendet werden, zwei senkrechte Basen (4A3), die an gegenüberliegenden Seiten angeordnet sind und zum Einpassen der Türen (9) und (10) oder der beweglichen Abdeckungen (11) verwendet werden; zwei Kanäle (4A4), in denen sich die Gewinde (5) befinden; wobei die Säulenprofile (4A) vertikal in den vorderen Ecken des Rahmens (3) angeordnet sind.

3. GEHÄUSE ZUM EINBAU VON TELEKOMMUNIKATIONSAUSRÜSTUNG nach Anspruch 1, **gekennzeichnet durch** Zwischenprofile (4B) einer "b"-Form mit geraden Ecken und Einfassungen, die in diesem Körper einen Kanal (4B1) zum Verschieben und Befestigen der schwimmend gelagerten Mutter (A) aufweisen, zwei Kanäle (4B2) mit Gewinden (5), die senkrecht dazwischen angeordnet sind, eine rechtwinklige Basis (4B3), die eine Tür oder ein Abschlussfeld aufnimmt.

4. GEHÄUSE ZUM EINBAU VON TELEKOMMUNIKATIONSAUSRÜSTUNG nach Anspruch 1, **gekennzeichnet durch** spatförmige Dreifach "C"-Profile (4C), bei denen sich vorn und seitlich in drei Ecken Kanäle (4C1) mit Gewinden (5), befinden.

5. GEHÄUSE ZUM EINBAU VON TELEKOMMUNIKATIONSAUSRÜSTUNG nach Anspruch 1, **gekennzeichnet durch** gewöhnlich spatförmige Basisprofile (4D), die auf der Außenseite zwei Kanäle (4D1) mit Gewinden (5) und dazwischen eine rechtwinklige Basis (4D2), mit denen die Ober- und Unterseiten der Türen und die Abschlussfelder aufgenommen werden, und auf der Innenseite zwei zylindrische Kanäle (4D3), mit denen die Profile seitlich fixiert werden, aufweisen.

6. GEHÄUSE ZUM EINBAU VON TELEKOMMUNIKATIONSAUSRÜSTUNG nach Anspruch 1, **gekennzeichnet durch** allgemein spatförmige "C"-Profile (4E) mit einem Kanal (4E1) und einem Gewinde (5) auf seiner Vorderseite.

7. GEHÄUSE ZUM EINBAU VON TELEKOMMUNIKATIONSAUSRÜSTUNG nach Anspruch 1, **gekennzeichnet durch** gewöhnlich spatförmige horizontale Zwischenprofile (4F) mit Kanälen (4F1) und Gewinden (5), wobei sich zwei vorn und zwei an den Seiten befinden.

## Revendications

1. Armoire abritant des équipements de télécommunication comprenant un ensemble de dispositifs et de perfectionnements utilisés dans la composition d'armoires modulaires normalisées ou personnalisées, facile à installer et à assembler, construite avec des matériaux métalliques ou similaires, présentant une forme et une disposition interne et externe qui favorise le stockage des types les plus divers d'équipements de télécommunications à l'intérieur de l'armoire (1), comprenant en outre une embase (2) constituée d'une structure métallique de forme rectangulaire qui comporte, sur sa partie supérieure, une plaque (2A) de forme générale rectangulaire et des entrées pour des conduits (2B), et, en outre, une armature (3) de forme parallélépipédique est fixée au dessus de l'embase (2), cette armature (3) étant assemblée au moyen d'un ensemble de profilés extrudés (4) réalisés en aluminium et constituée de profilée en colonne (4A), de profilés intermédiaires (4B), de profilés triples en forme de C (4C), de profilés de base (4D), de profilés en forme de C (4E) et de profilés horizontaux intermédiaires (4F) ; des plaques de division (7) présentant des formes générales spécifiques sont fixées au côté intérieur de l'armature (3) pour permettre la fixation des fils, des câbles et des composants électroniques ; les portes principales (8) sont fixées à l'extérieur de l'armature... les portes latérales (8A), (8B) et (8C) sont fixées à l'armature métallique (3), par l'intermédiaire de charnières (9) et du côté où il n'y a pas de portes, des panneaux de fermeture (10), (10A), (10B) et (10C) de forme générale rectangulaire sont utilisés, ces panneaux pouvant être fixés de manière verrouillée ou amovible, l'armoire comprenant également un couvercle supérieur (11) de forme pyramidale, avec des moyens de fixation (11A) pour une ouverture de l'armoire par le dessus, **caractérisé en ce que** chacun des profilés (4A-4F) comporte un système de filetages longitudinaux (5) aménagés au travers des parois internes des conduits de profilés (4A2, 4A4, 4B1, 4B2, 4C1, 4D1, 4E1, 4F1), qui sont ainsi employés pour fixer directement des boulons (6) à un endroit quelconque le long des profilés (4A-4F).

2. Armoire abritant des équipements de télécommunication selon la revendication 1, **caractérisée par** des profilés en colonne (4A) présentant une forme générale spécifique et comportant un bord en forme d'arc (4A1) permettant une meilleure finition des angles, deux conduits (4A2) agencés au niveau de côtés opposés étant utilisés pour le coulissement et l'ajustement des écrous flottants (A), deux embases perpendiculaires (4A3) agencées au niveau de côtés opposés étant utilisées pour l'agencement des portes (9) et (10) ou des couvercles amovibles (11) ; deux conduits (4A4) dans lesquels les filetages (5) sont agencés ; les profilés en colonne (4A) étant agencés verticalement au niveau des angles antérieurs de l'armature (3).

3. Armoire abritant des équipements de télécommunication selon la revendication 1, **caractérisée par** des profilés intermédiaires (4B) en forme de B et présentant des angles et des bords droits, dont le corps comprend un conduit (4B1) pour le coulissement et la fixation de l'écrou flottant (A), deux conduits (4B2) comprenant des filetages (5) étant perpendiculairement agencés entre eux, et une embase perpendiculaire (4B3) pour recevoir une porte ou un panneau de fermeture.

4. Armoire abritant des équipements de télécommunication selon la revendication 1, **caractérisée par** des profilés triples en forme de C (4C) de forme parallélépipédique, comprenant au niveau de trois de ses angles, des conduits (4C1) comportant des filetages (5) au niveau de leur partie antérieur et de leurs côtés.

5. Armoire abritant des équipements de télécommunication, selon la revendication 1, **caractérisée par** des profilés de base (4D) de forme générale parallélépipédique comprenant, au niveau de leur partie extérieure, deux conduits (4D1) comportant des filetages (5) et, entre ces conduits, une embase perpendiculaire (4D2) utilisée pour recevoir les parties supérieure et inférieure des portes et des panneaux de fermeture, et au niveau de la partie intérieure des profilés, deux conduits cylindrique (4D3) pour la fixation latérale des profilés.

6. Armoire abritant des équipements de télécommunication selon la revendication 1, **caractérisée par** des profilés en forme de C (4E) de forme générale parallélépipédique, comportant un conduit (4E1) et un filetage (5) sur leur partie antérieure.

7. Armoire abritant des équipements de télécommunication selon la revendication 1, **caractérisée par** des profilés horizontaux intermédiaires (4F) de forme générale parallélépipédique, comportant des conduits (4F1) et des filetages (5) dont deux sont disposés sur leur partie antérieure et deux sur les côtés.
